# EUROPÄISCHE PATENTANMELDUNG

(11) **EP 1 153 857 A1**
(43) Veröffentlichungstag der Anmeldung: **14.11.2001**
(21) Anmeldenummer: 01110514.5
(22) Anmeldetag: 28.04.2001
(51) Int. Cl.: B65G 15/62

(54) **Vorrichtung zum Abdichten von Seitenrandbereichen eines endlos umlaufenden Förderbandes**

(30) Priorität: 12.05.2000 DE 10023325
(71) Anmelder: Santrade Ltd., CH-6002 Luzern (CH)
(72) Erfinder: Schermutzki, Konrad, 71686 Remseck (DE); Kleinhans, Matthias, 71336 Waiblingen (DE)
(74) Vertreter: Patentanwälte Ruff, Wilhelm, Beier, Dauster & Partner

(57) **Zusammenfassung**

Vorrichtung zum Abdichten von Seitenrandbereichen eines endlos umlaufenden Förderbandes aus Stahl.

Erfindungsgemäß ist der Dichtkörperanordnung wenigstens eine Magneteinheit zugeordnet, die über die gesamte Länge der Dichtkörperanordnung eine gleichmäßige Anziehkraft auf das Förderband ausübt.

## Beschreibung

Die Erfindung betrifft eine Vorrichtung zum Abdichten von Seitenrandbereichen eines endlos umlaufenden Förderbandes aus magnetisierbarem Material, insbesondere Stahl, gegen ein auf die Bandrückseite einwirkendes, flüssiges oder gasförmiges Wärmeträgermedium im Bereich einer Temperierstrecke mit jeweils wenigstens einer, auf Höhe jedes Seitenrandbereiches angeordneten und wenigstens über die Länge der Temperierstrecke durchgängigen Dichtkörperanordnung.

Aus der DE 41 35 613 C2 ist ein umlaufendes Förderband bekannt, das aus Stahl besteht. Im Bereich einer Temperierstrecke des Förderbandes, beispielsweise einer Kühlstrecke, wird von unten her als Wärmeträgermedium Kühlwasser gegen die Bandunterseite gesprüht, wodurch auf der Bandoberseite befindliche Produkte gekühlt werden können. Um zu verhindern, dass gegen die Unterseite des Förderbandes gesprühtes Kühlwasser seitlich an den Seitenwandbereichen des Förderbandes heraustreten und in ungewünschter Weise die Bandoberseite befeuchten kann, sind den Seitenrandbereichen des Förderbandes Dichtkörperanordnungen in Form von Dichtleisten zugeordnet, auf denen die Seitenrandbereiche des Förderbandes aufliegen. Die den Seitenrandbereichen des Förderbandes zugewandten Stirnflächen der Dichtleisten sind mit schräg verlaufenden Nuten versehen. Dadurch wird zum einen verhindert, dass Kühlflüssigkeit seitlich des Förderbandes heraustreten kann. Zum anderen wird auch an der Bandunterseite anhaftendes Kühlwasser durch hydrodynamische Vorgänge aufgrund des Bandlaufes wieder nach innen zurückgeführt, wodurch zusätzliche Dichtmaßnahmen vermieden werden. Die mit den Nuten versehenen Dichtleisten werden daher auch als hydrodynamische Wassereinweiser bezeichnet.

Aufgabe der Erfindung ist es, eine Vorrichtung der eingangs genannten Art zu schaffen, die die Abdichtung der Bandunterseite des Förderbandes weiter verbessert.

Diese Aufgabe wird dadurch gelöst, dass der Dichtkörperanordnung wenigstens eine Magneteinheit zugeordnet ist, die über die gesamte Länge der Dichtkörperanordnung eine gleichmäßige Anziehkraft auf das Förderband ausübt. Die erfindungsgemäße Lösung geht von der Erkenntnis aus, dass die aus dem Stand der Technik bekannte Abdichtvorrichtung zu Problemen führt, falls sich in den Seitenrandbereichen des Förderbandes aufgrund von thermischen oder mechanischen Verwerfungen Bandkantenwellen ergeben, in denen dann keine ausreichende Dichtfunktion mehr vorhanden ist. Durch die erfindungsgemäß zusätzlich aufgebrachte Magnetkraft wird es ermöglicht, die Bandunterseite im Seitenrandbereich auch im Bereich derartiger Bandkantenwellen zu gewährleisten. Dabei kann jeweils eine über die gesamte Prozessbereichslänge des Förderbandes durchgängige Dichtkörperanordnung auf jeder Bandseite vorgesehen sein. Alternativ kann sich die jeweilige Dichtkörperanordnung auch lediglich über die gesamte Länge der jeweiligen Temperierstrecke erstrecken. So kann insbesondere jeweils eine durchgängige Dichtkörperanordnung auf jeder Bandseite während einer ersten Kühl- oder Heizstrecke und eine weitere Dichtkörperanordnung auf jeder Bandseite über die Länge einer weiteren, zu der ersten Kühl- oder Heizstrecke beanstandeten Kühl- oder Heizstrecke vorgesehen sein. Die gesamte Prozesslänge des Förderbandes definiert die Gesamtlänge des jeweiligen Bandtrums zwischen einer vorderen und einer hinteren Umlenktrommel für das Förderband.

In Ausgestaltung der Erfindung ist jede Dichtkörperanordnung auf der der Bandseite zugewandten Stirnfläche mit schräg verlaufenden Nuten nach Art eines hydrodynamischen Wassereinweisers gestaltet. Bei dieser Ausgestaltung wird die erfindungsgemäße Lösung mit der in der DE 41 35 613 C2 offenbarten Lösung kombiniert, wodurch eine weiter verbesserte Abdichtung erzielt wird.

Die wenigstens eine Dichtkörperanordnung kann grundsätzlich so gestaltet sein, wie sie aus dem Stand der Technik bereits bekannt ist. Besonders geeignet für die erfindungsgemäße Lösung sind jedoch Dichtkörperanordnungen, die durch eine etwas größere Auflagefläche für die Seitenrandbereiche eine gute Stützfunktion für die Seitenrandbereiche erfüllen, da die Magnetkräfte der wenigstens einen Magneteinheit nur dann sinnvoll eingesetzt werden können, wenn gleichzeitig eine sichere, flächige und gleichmäßige Bandabstützung erzielt wird.

In weiterer Ausgestaltung der Erfindung ist die Dichtkörperanordnung mit wenigstens einem Kanal zur Führung eines Wärmeträgermediums für eine aktive Temperierung der Seitenwandbereiche des Förderbandes versehen. Besonders vorteilhaft ist die Dichtkörperanordnung selbst aus wärmeleitendem Material hergestellt, um einen guten Heiz- oder Kühlwirkungsgrad für die Seitenrandbereiche des Förderbandes zu erzielen.

In weiterer Ausgestaltung der Erfindung ist die Magneteinheit durch mehrere in Bandlaufrichtung längsgerichtete Magnetelemente gebildet, die in wenigstens einer Reihe hintereinander an der Dichtkörperanordnung angeordnet sind. Dadurch können quader- oder blockförmige Magnetelemente, beispielsweise als Permanentmagneten, vorgesehen sein, so dass eine einfache Montage ermöglicht wird.

In weiterer Ausgestaltung der Erfindung weist die Magneteinheit wenigstens einen Elektromagneten auf. Diese Ausgestaltung hat den Vorteil, dass keine permanente magnetische Wirkung, sondern lediglich bei Bedarf eine entsprechende Magnetwirkung erzielbar ist.

In weiterer Ausgestaltung der Erfindung ist die Magneteinheit derart variabel gestaltet, dass die Einwirkung unterschiedlich großer Magnetkräfte auf das Förderband ausführbar ist. Dadurch kann die aufzubringende Magnetkraft variiert und auf die entsprechenden Bandabmessungen sowie die Größe der Bandkantenwellen abgestimmt werden.

In weiterer Ausgestaltung der Erfindung ist die Magneteinheit mittels einer Höhenverlagerungseinrichtung in der Dichtkörperanordnung positioniert. Dadurch ist es möglich, Permanentmagnetelemente einzusetzen und dennoch mittels der Höhenverlagerungseinrichtung unterschiedlich große Magnetkräfte auf das Förderband auszuüben.

In weiterer Ausgestaltung der Erfindung ist der wenigstens eine Elektromagnet an eine Steuereinheit angeschlossen, die den Elektromagneten derart elektrisch oder elektronisch steuert, dass dieser unterschiedlich große Magnetkräfte auf das Förderband ausübt. Diese elektrische oder elektronische Lösung ist vorteilhaft an eine Bandsteuerung koppelbar, so dass eine Abhängigkeit der Magnetkräfte von der Bandlaufgeschwindigkeit, von der Bandtemperatur oder auch von anderen Bezugsgrößen der Bandanlage ermöglicht ist.

In weiterer Ausgestaltung der Erfindung ist in Bandlaufrichtung hinter der Temperierstrecke dem Förderband eine Entmagnetisiereinrichtung zugeordnet. Diese Entmagnetisiereinrichtung kann ausschließlich auf Höhe der Seitenrandbereiche des Förderbandes vorgesehen sein, auf denen auch die Magnetisierung durch die wenigstens eine Magneteinheit stattgefunden hatte. Die Entmagnetisiereinrichtung kann entweder direkt hinter einer Temperierstrecke oder aber auch im Bereich des Bandauslaufes oder im Bereich eines rücklaufenden Bandtrums vorgesehen sein.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt schematisch in einer Seitenansicht ein um zwei Umlenktrommeln endlos umlaufendes Förderband mit zwei Temperierzonen,
- Fig. 2: in vergrößerter, schematischer Darstellung einen Querschnitt durch das Förderband nach Fig. 1, wobei eine Ausführungsform einer erfindungsgemäßen Vorrichtung zum Abdichten der Seitenrandbereiche des Förderbandes dargestellt ist,
- Fig. 3: in weiter vergrößerter Darstellung eine weitere Ausführungsform einer Abdichtvorrichtung ähnlich Fig. 2,
- Fig. 4: eine weitere Ausführungsform einer Abdichtvorrichtung ähnlich Fig. 3,
- Fig. 5: eine weitere Ausführungsform einer Abdichtvorrichtung für ein Förderband nach Fig. 2,
- Fig. 6: in einer Seitenansicht eine Dichtkörperanordnung für eine Abdichtvorrichtung ähnlich Fig. 2,
- Fig. 7: eine Draufsicht auf die Dichtkörperanordnung nach Fig. 6,
- Fig. 8: einen Querschnitt durch die Dichtkörperanordnung nach Fig. 6 entlang der Schnittlinie VIII-VIII in Fig. 6,
- Fig. 9: einen vergrößerten Ausschnitt IX der Dichtkörperanordnung nach Fig. 6,
- Fig. 10: in vergrößerter schematischer Darstellung eine weitere Ausführungsform einer erfindungsgemäßen Abdichtvorrichtung, wobei einer Dichtkörperanordnung eine höhenverlagerbare Magneteinheit zugeordnet ist, und
- Fig. 11: eine weitere Ausführungsform ähnlich Fig. 3 mit zusätzlicher Absaugung.

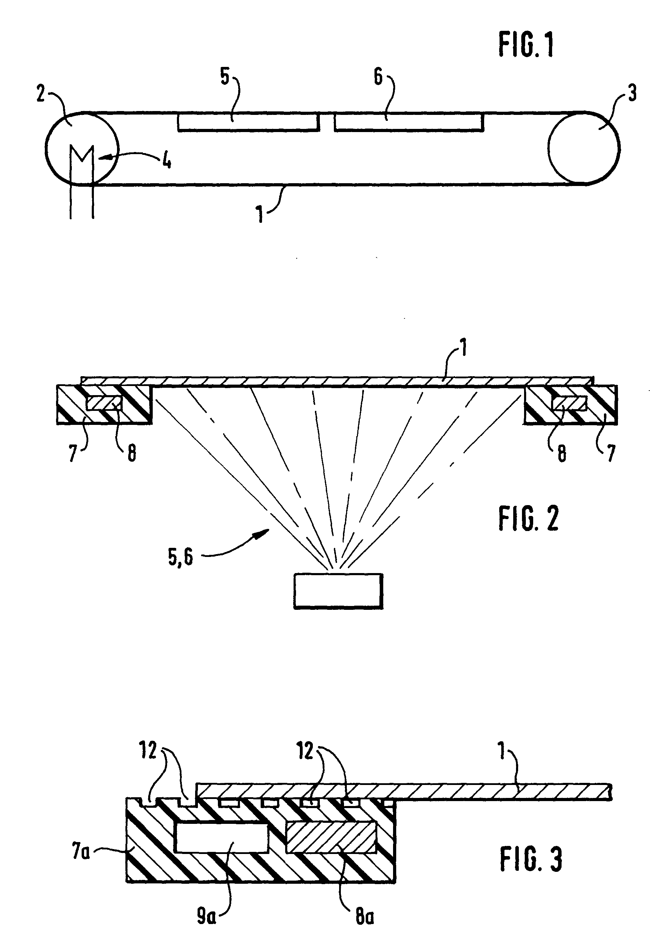

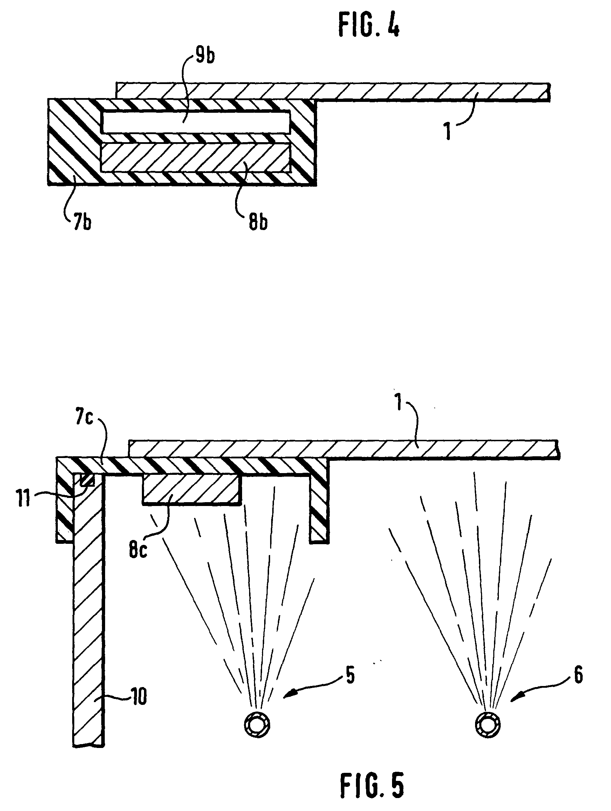

Ein Förderband 1 nach Fig. 1 stellt ein endlos umlaufendes Stahlband dar, das im Bereich einer Einlauftrommel 2 sowie im Bereich einer Auslauftrommel 3 umgelenkt ist. Die vordere Umlenktrommel 2 - auf die Bandlaufrichtung bezogen - ist mit einer Heizvorrichtung 4 versehen, so dass das Stahlband 1 bereits im Bereich der Einlauftrommel 2 beheizbar ist. Beide Umlenktrommeln 2, 3 sind in nicht näher dargestellter, jedoch grundsätzlich bekannter Weise in einem stationären Traggestell drehbar gelagert, wobei wenigstens eine Umlenktrommel 2, 3 mit einem Antrieb versehen ist. Das sich über die gesamte Länge des Förderbandes 1 erstreckende Traggestell trägt in nicht näher dargestellter Weise zwei Temperiereinrichtungen 5, 6, die jeweils über eine bestimmte Bandlänge des Förderbandes 1 im Bereich des Bandobertrums eine Temperierstrecke definieren, in der eine Heizung oder Kühlung oder auch eine Konditionierung der Bandoberfläche auf eine definierte Temperatur erreichbar sind. Derartige Temperiereinrichtungen können so gestaltet sein, wie dies in der DE 41 35 613 C2 beschrieben ist. Vorzugsweise sind die Temperiereinrichtungen 5, 6 unterhalb des Bandobertrums positioniert und gegen die Bandunterseite gerichtet. Die Temperiereinrichtungen 5, 6 sind mit Sprühdüsen versehen, die über die Länge der Temperierstrecke verteilt gleichmäßig ein Wärmeträgermedium, vorzugsweise ein Kühl- oder Heizmedium in Form von Wasser oder Dampf, gegen die Bandunterseite sprühen. Dies ist in Fig. 2 und auch in Fig. 5 schematisch dargestellt. Um zu verhindern, dass das gegen die Bandunterseite über nahezu die gesamte Bandbreite aufgebrachte Wärmeträgermedium zu beiden Seiten an den Seitenrandbereichen des Förderbandes 1 seitlich heraustritt und im ungünstigsten Fall sogar die Bandoberseite benetzt, ist auf beiden Bandseiten auf Höhe der Seitenrandbereiche bereits eine Dichtkörperanordnung 7 vorgesehen, die in nicht näher dargestellter Weise am Traggestell festgelegt sind. Zudem sind unterhalb der Dichtkörperanordnungen 7 wenigstens im Bereich der Temperierstrecke 5, 6 noch seitliche Schottwände vorgesehen, die ein seitliches Austreten von Wärmeträgermedium unterhalb der Dichtkörperanordnung 7 verhindern. Die grundsätzliche Anordnung dieser Dichtkörperanordnungen 7, die auch als Dichtleisten bezeichnet werden, und entsprechend darunter befindlicher Schottwände ist aus der DE 41 35 613 C2 bekannt, so dass für eine weitere Erläuterung auf diesen Stand der Technik verwiesen wird. Die Dichtkörperanordnungen 7 können von grundsätzlichen Aufbau her den Dichtleisten entsprechen, wie sie aus der DE 41 35 613 C2 bekannt sind. Vorzugsweise sind die Dichtkörperanordnungen 7 aus Kunststoff hergestellt. Sie können in gleicher Weise jedoch auch aus Metall oder Holz gestaltet sein.

Die Dichtkörperanordnungen 7 weisen eine relativ breite obere Stirnfläche auf und erstrecken sich durchgängig wenigstens über die Länge jeweils einer Temperierstrecke. In gleicher Weise kann sich jede Dichtkörperanordnung 7 auch über die gesamte Prozesslänge des Förderbandes 1 zwischen den beiden Umlenktrommeln 2, 3 erstrecken. Die Dichtkörperanordnungen 7 bilden somit eine über die entsprechende Strecke durchgängige Stützauflage für die Seitenrandbereiche des Förderbandes 1. Um zu verhindern, dass aufgrund von durch thermische oder mechanische Verwerfungen entstehenden Bandkantenwellen eine Undichtheit zwischen den Dichtkörperanordnungen 7 und den Seitenrandbereichen des Förderbandes entsteht, sind in die Dichtkörperanordnungen 7 auf Höhe der Seitenrandbereiche des Förderbandes 1 Magneteinheiten 8 räumlich integriert, die sich vorzugsweise ebenfalls über die gesamte Länge der Dichtkörperanordnungen 7 erstrecken. Die Magneteinheiten 8 können sich dabei entweder durchgängig über die Länge der Dichtkörperanordnungen 7 erstrecken oder aber auch aus mehreren, in einer Reihe hintereinander angeordneten und in geringen Abständen zueinander positionierten Magnetelementen aufgebaut sein. Nachfolgend werden ausschließlich Magneteinheiten mit Permanentmagneten anhand der Zeichnungen beschrieben. In gleicher Weise ist es jedoch auch möglich, Magneteinheiten mit Elektromagneten und entsprechenden elektrischen oder elektronischen Steuerungen vorzusehen, um die Magnetkräfte der Elektromagneten steuern zu können.

Beim Ausführungsbeispiel nach Fig. 3 ist eine Dichtkörperanordnung 7a vorgesehen, die von grundsätzlichem Aufbau und Montage her den Dichtkörperanordnungen 7 nach Fig. 2 entspricht. Ergänzend ist diese Dichtkörperanordnung 7a jedoch für eine aktive Temperierung der Seitenrandbereiche des Förderbandes 1 vorgesehen. Hierzu wird die Dichtkörperanordnung 7a durch ein Hohlprofil aus wärmeleitendem Material, vorzugsweise Metall, vorgesehen, wobei neben der in einem entsprechenden Hohlraum der Dichtkörperanordnung 7a eingebetteten Magneteinheit 8a seitlich nach außen noch ein Strömungskanal 9a für ein Wärmeträgermedium vorgesehen ist. Der Strömungskanal 9a ist an einen separaten Temperierkreislauf angeschlossen, der insbesondere zur geeigneten Temperierung der Seitenrandbereiche des Förderbandes 1 dient. Dadurch wird gewährleistet, dass an diesen Seitenrandbereichen, in denen zumindest weitgehend keine Produktaufgabe mehr vorhanden ist, eine im Vergleich zur Bandmitte möglichst gleichbleibende Temperierung erzielt wird, so dass über die Bandbreite das Förderband nahezu keine Temperaturunterschiede aufweist. Alternativ kann mit dieser aktiven Temperierung auch gezielt eine gegenüber der Bandmitte veränderte Bandtemperatur erreicht werden, um beispielsweise die Randbereiche der Produktaufgabe schneller aushärten zu lassen.

Beim Ausführungsbeispiel nach Fig. 4 ist die Dichtkörperanordnung 7b ebenfalls zur aktiven Temperierung des jeweiligen Seitenrandbereiches des Förderbandes 1 vorgesehen. Hier ist jedoch der Strömungskanal 9b für das Wärmeträgermedium des zusätzlichen Temperierkreises oberhalb des Hohlraumes für die Magneteinheit 8b vorgesehen.

Die obere, der Bandunterseite zugewandte Stirnfläche der Dichtkörperanordnung 7a ist beim Ausführungsbeispiel nach Fig. 3 zusätzlich mit in Bandlaufrichtung schräg nach innen verlaufenden Nuten 12 versehen, wodurch die Dichtkörperanordnung 7a zusätzlich als hydrodynamischer Wassereinweiser gemäß der DE 41 35 613 C2 vorgesehen ist. Die Gestaltung und Ausrichtung der Nuten 12 kann in verschiedenen Ausführungen vorgesehen sein, wie sie in dieser DE 41 35 613 C2 beschrieben sind.

Beim Ausführungsbeispiel nach Fig. 5 wird die Dichtkörperanordnung 7c im Bereich der Unterseite des Seitenrandbereiches des Förderbandes 1 durch ein nach unten offenes, einem umgedrehten U entsprechendes Profil gebildet, an dessen Innenseite gemäß der Darstellung nach Fig. 5 die Magneteinheit 8c in Form einer einzelnen Permanentmagnetleiste oder in Form von mehreren in einer Reihe hintereinander angeordneten Permanentmagneten angeordnet ist. Dem Dichtkörperprofil 7c ist im Bereich des äußeren, nach unten gerichteten U-Schenkels eine Schottwand 10 zugeordnet, die sich innenseitig an diesen U-Schenkel anschmiegt und mit seinem oberen Stirnrand über eine elastische Dichtung 11 einen dichten Abschluss mit der Innenseite des Dichtkörperprofils 7c bildet.

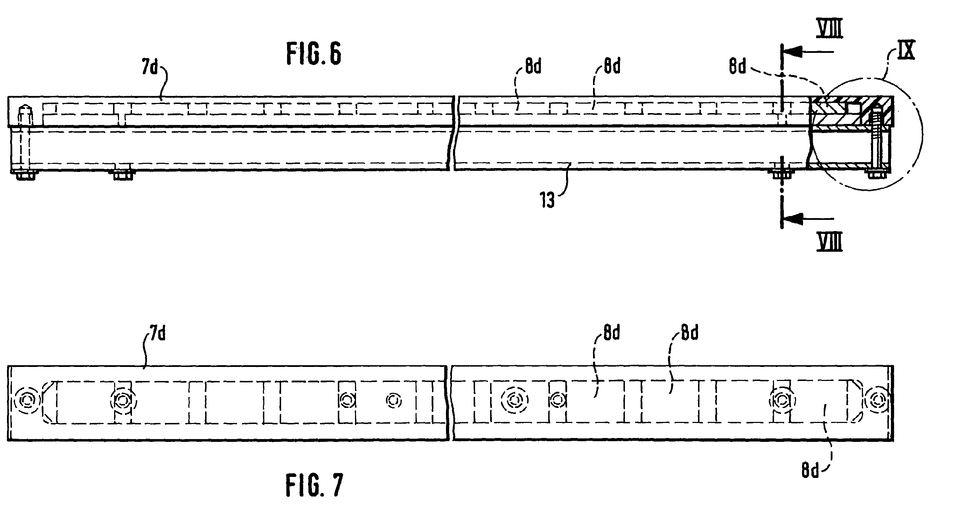

Die in Fig. 6 und 7 dargestellte Dichtkörperanordnung 7d ist ähnlich der Dichtkörperanordnung 7 nach Fig. 2 gestaltet und erstreckt sich durchgängig über die gesamte Länge einer Temperierstrecke eines nicht näher dargestellten Förderbandes. Die Dichtkörperanordnung 7d weist gemäß den Fig. 7 bis 9 ein als Vierkanthohlprofil gestaltetes Trägerprofil 13 auf, das in nicht näher dargestellter Weise stabil mit dem Traggestell des Förderbandes verbunden ist. Das Trägerprofil 13 trägt das eigentliche, aus Kunststoff bestehende Dichtkörperprofil 7d wie auch eine Stützleiste 14, die in einem über nahezu die gesamte Länge des Dichtkörperprofils 7d durchgängigen Hohlraum integriert ist. Die Halteleiste 14 trägt eine Vielzahl von quaderförmigen Permanentmagnetelementen 8d, die in einer Reihe in gleichmäßigen Abständen hintereinander in dem Hohlraum des Dichtkörperprofils 7d angeordnet sind. Die Permanentmagnetelemente 8d können mit der Halteleiste 14 verklebt sein oder ausschließlich durch die Klemmung zwischen Halteleiste 14 und Dichtkörperprofil 7d festgelegt sein. Die Festlegung und Sicherung des Dichtkörperprofils 7d wie auch der Halteleiste 14 auf dem Trägerprofil 13 erfolgt durch dargestellte, jedoch nicht mit Bezugszeichen versehene Schraubverbindungen. Die Schraubverbindungen zur Sicherung des Dichtkörperprofils 7d am Trägerprofil 13 sind mit in das Dichtkörperprofil 7d integrierten Haltebuchsen versehen, um eine verbesserte Befestigung der aus Kunststoff bestehenden Dichtkörperprofile 7d an dem Trägerprofil 13 zu erzielen. Die so gebildete Dichtkörperanordnung kann als Einheit vormontiert und in der vormontierten Gestaltung gemäß den Fig. 6 bis 9 an dem Traggestell für das Förderband auf Höhe des jeweiligen Seitenrandbereiches des Obertrums des Förderbandes montiert werden.

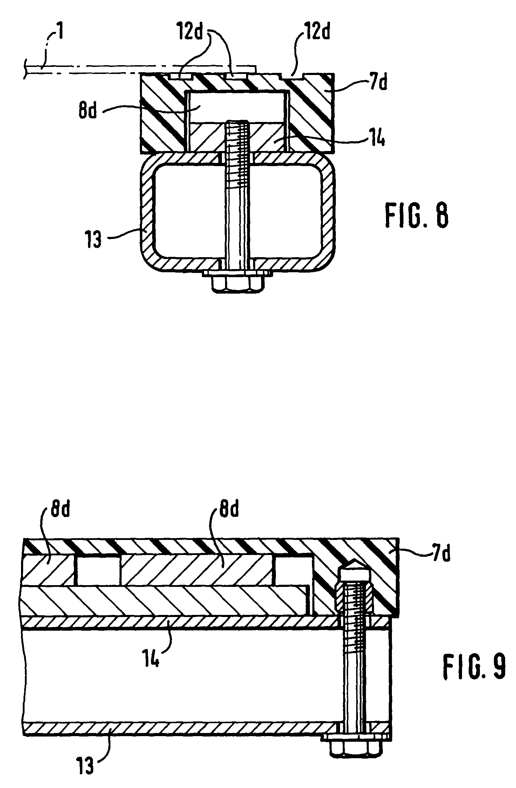

Wie anhand der Fig. 8 erkennbar ist, ist auch die obere Stirnfläche des Dichtkörperprofils 7d mit schräg nach innen verlaufenden Nuten 12d versehen, die hydrodynamische Funktion gemäß dem Ausführungsbeispiel nach Fig. 3 aufweisen.

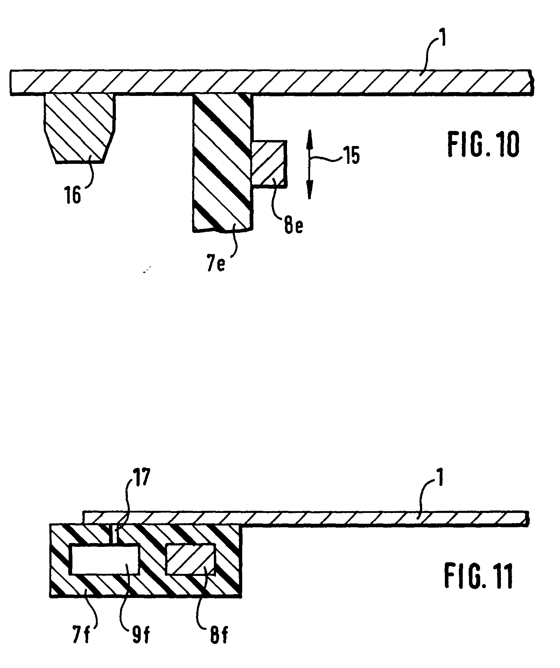

Beim Ausführungsbeispiel nach Fig. 10 wird das Förderband 1 in seinem Seitenrandbereich durch eine Dichtkörperanordnung 7e über die gesamte Länge seiner Temperierstrecke abgestützt. Zusätzlich ist seitlich außerhalb der Bandstützung in Form der Dichtkörperanordnung 7e an der Bandunterseite ein Abtropfprofil 16 angebracht, wie es grundsätzlich aus dem Stand der Technik bereits bekannt ist. Ein solches Abtropfprofil 16 dient als Abtropfkante für an der Bandunterseite anhaftendes Wasser, wobei einem derartigen Abtropfprofil 16, das mit der Bandunterseite mitläuft, in nicht näher dargestellter Weise am Traggestell eine Auffangrinne zugeordnet ist, die gegebenenfalls einstückiger Fortsatz der Dichtkörperanordnung 7e sein kann. Beim Ausführungsbeispiel nach Fig. 10 ist an der nach innen gewandten Seitenfläche der Dichtkörperanordnung 7e eine Magneteinheit 8a angeordnet, die mittels einer lediglich durch einen Doppelpfeil schematisiert dargestellten Höhenverlagerungseinrichtung 15 in ihrem Abstand relativ zur Bandunterseite des Förderbandes 1 einstellbar an der Dichtkörperanordnung 7e gehalten ist. Die Magneteinheit 8e kann aus einer einzelnen, über die gesamte Länge der Dichtkörperanordnung 7e durchgehenden Permanentmagnetleiste oder auch aus einer Reihe von in Abstand hintereinander angeordneten Permanentmagnetelementen gestaltet sein, die dann vorzugsweise auf gemeinsamen Trägern angeordnet sind, um die gemeinsame Höhenverlagerung durch die Höhenverlagerungseinrichtung 15 zu vereinfachen.

Eine Vorrichtung zum Abdichten der Seitenrandbereiche eines endlos umlaufenden Förderbandes 1 gemäß Fig. 11 entspricht im wesentlichen dem zuvor beschriebenen Ausführungsbeispiel nach Fig. 3. Auch hier ist in der Dichtkörperanordnung 7f eine Magneteinheit 8f räumlich integriert. Neben dieser Magneteinheit 8f ist außenseitig zudem ein Strömungskanal 9f entsprechend dem Strömungskanal nach Fig. 3 vorgesehen, der zur Temperierung der Dichtkörperanordnung 7f dienen kann. Ergänzend dient dieser Strömungskanal 9f zur Schaffung eines Vakuums zwischen der Bandrückseite 1 und der Oberfläche der Dichtkörperanordnung 7f in dem Bereich, in dem der Seitenrandbereich des Förderbandes 1 auf der Oberfläche der Dichtkörperanordnung 7f aufliegt. Hierdurch ist es möglich, Dämpfe oder Gase abzusaugen, die in diesem Dichtspalt zwischen Förderband 1 und Oberfläche der Dichtkörperanordnung 7f nach außen diffundieren. Zur Absaugung sind zweckmäßigerweise - in Längsrichtung der Dichtkörperanordnung 7f gesehen - in kurzen Abständen, vorzugsweise 50 mm, hintereinander angeordnete Stichbohrungen 16 vorgesehen, die sich zwischen der Oberfläche der Dichtkörperanordnung 7f und dem Strömungskanal 9f erstrecken. Mittels dieser Stichbohrungen 17, die als Absaugkanäle dienen, und dem mittels einer entsprechenden Pumpeinrichtung oder anders gestalteten Fördereinrichtungen erzeugten Unterdruck im Strömungskanal 9f können alle Arten von möglicherweise austretenden Dämpfen oder Gasen aus dem Dichtspalt zwischen Förderband 1 und Dichtkörperanordnung 7f abgesaugt werden. Dies ist insbesondere bei sogenannten Brüden vorteilhaft, d.h. bei kontaminierten oder schädlichen Dämpfen, die Umwelt oder Bedienpersonen beeinträchtigen könnten. Insbesondere vorteilhaft ist diese Absaugungsvorrichtung auch dann, wenn auf dem Förderband 1 hygroskopische Produkte transportiert und behandelt werden, da bereits geringe Feuchtigkeitsanteile zu einer nachteiligen Veränderung der Eigenschaften des Produktes führen könnten. Durch die Absaugung im Bereich der Dichtkörperanordnung 7f wird verhindert, dass Wasserdämpfe, Mischdämpfe oder Brüden nach außen austreten und das Produkt beeinflussen können.

## Patentansprüche

1. Vorrichtung zum Abdichten von Seitenrandbereichen eines endlos umlaufenden Förderbandes aus magnetisierbarem Material, insbesondere Stahl, gegen ein auf die Bandrückseite einwirkendes, flüssiges oder gasförmiges Wärmeträgermedium im Bereich einer Temperierstrecke mit jeweils wenigstens einer auf Höhe jedes Seitenrandbereiches angeordneten und wenigstens über die Länge der Temperierstrecke durchgängigen Dichtkörperanordnung,
**dadurch gekennzeichnet,**
**dass** der Dichtkörperanordnung (7 bis 7f) wenigstens eine Magneteinheit (8 bis 8f) zugeordnet ist, die über die gesamte Länge der Dichtkörperanordnung (7 bis 7f) eine gleichmäßige Anziehkraft auf das Förderband (1) ausübt.

2. Vorrichtung nach Anspruch 1, **dadurch gekennzeichnet, dass** die wenigstens eine Magneteinheit (8 bis 8d, 8f) in der Dichtkörperanordnung (7 bis 7d, 7f) räumlich integriert ist.

3. Vorrichtung nach Anspruch 1, **dadurch gekennzeichnet, dass** jede Dichtkörperanordnung (7 bis 7d, 7f) ein längserstrecktes Profil aufweist.

4. Vorrichtung nach Anspruch 1, **dadurch gekennzeichnet, dass** jede Dichtkörperanordnung (7a, 7b) auf der der Bandseite zugewandten Stirnfläche mit schräg verlaufenden Nuten (12, 12d) nach Art eines hydrodynamischen Wassereinweisers gestaltet ist.

5. Vorrichtung nach Anspruch 1, **dadurch gekennzeichnet, dass** die Dichtkörperanordnung (7a, 7b) mit wenigstens einem Kanal (9a, 9b) zur Führung eines Wärmeträgermediums für eine aktive Temperierung der Seitenrandbereiche des Förderbandes (1) versehen ist.

6. Vorrichtung nach Anspruch 1, **dadurch gekennzeichnet, dass** die Magneteinheit (8 bis 8d) durch mehrere in Bandlaufrichtung längsgerichtete Magnetelemente gebildet ist, die in wenigstens einer Reihe hintereinander an der Dichtkörperanordnung (7 bis 7d) angeordnet sind.

7. Vorrichtung nach Anspruch 6, **dadurch gekennzeichnet, dass** die Magneteinheit (8 bis 8d) durch wenigstens ein Permanentmagnetelement gebildet ist.

8. Vorrichtung nach Anspruch 1, **dadurch gekennzeichnet, dass** die Magneteinheit wenigstens einen Elektromagneten aufweist.

9. Vorrichtung nach einem der vorhergehenden Ansprüche,
**dadurch gekennzeichnet, dass** die Magneteinheit derart variabel gestaltet ist, dass die Einwirkung unterschiedlich großer Magnetkräfte auf das Förderband (1) ausführbar ist.

10. Vorrichtung nach Anspruch 9, **dadurch gekennzeichnet, dass** die Magneteinheit (8e) mittels einer Höhenverlagerungseinrichtung (15) an der Dichtkörperanordnung (7e) positioniert ist.

11. Vorrichtung nach Anspruch 8 oder 9, **dadurch gekennzeichnet, dass** der wenigstens eine Elektromagnet an eine Steuereinheit angeschlossen ist, die den Elektromagneten derart elektrisch oder elektronisch steuert, dass dieser unterschiedlich große Magnetkräfte auf das Förderband ausüben kann.

12. Vorrichtung nach einem der vorhergehenden Ansprüche,
**dadurch gekennzeichnet, dass** der wenigstens einen Dichtkörperanordnung (7c) wenigstens eine seitliche Schottwand (10) zugeordnet ist.

13. Vorrichtung nach Anspruch 1 oder 5, **dadurch gekennzeichnet, dass** eine Absaugungsvorrichtung (16) vorgesehen ist, die zwischen Dichtkörperanordnung (7f) und Bandrückseite austretende Dämpfe oder Gase absaugt.

14. Vorrichtung nach einem der vorhergehenden Ansprüche,
**dadurch gekennzeichnet, dass** in Bandlaufrichtung hinter der Temperierstrecke dem Förderband eine Entmagnetisiereinrichtung zugeordnet ist.
